Europäisches Patentamt

European Patent Office

Office européen des brevets

(19)

(11) Veröffentlichungsnummer : **0 226 594**
**B1**

(12)          EUROPÄISCHE PATENTSCHRIFT

(45) Veröffentlichungstag der Patentschrift :
13.12.89

(21) Anmeldenummer : 86902323.4

(22) Anmeldetag : 10.04.86

(86) Internationale Anmeldenummer :
PCT/DE 86/00154

(87) Internationale Veröffentlichungsnummer :
WO/8607556 (31.12.86 Gazette 86/28)

(51) Int. Cl.⁴ : **B 25 J 19/00**, B 25 J 17/02,
B 23 Q 16/04, H 01 H 19/63,
B 25 J 9/10

(54) ROBOTERGELENK MIT EINEM ELEKTRISCHEN ANTRIEBSMOTOR.

(30) Priorität : 22.06.85 DE 3522337

(43) Veröffentlichungstag der Anmeldung :
01.07.87 Patentblatt 87/27

(45) Bekanntmachung des Hinweises auf die Patenterteilung : 13.12.89 Patentblatt 89/50

(84) Benannte Vertragsstaaten :
CH DE FR GB IT LI SE

(56) Entgegenhaltungen :
WO—A—84 /017 40
DE—A— 3 006 243
DE—B— 1 179 077
FR—A— 2 153 036
US—A— 2 798 908
US—A— 3 294 256
US—A— 3 419 158

(73) Patentinhaber : ROBERT BOSCH GMBH
Postfach 50
D-7000 Stuttgart 1 (DE)

(72) Erfinder : BRUNS, Joachim
An der Neckarbrücke 11
D-7305 Altbach (DE)
Erfinder : GOSDOWSKI, Gerhard
Camberleystr. 83
D-7120 Bietigheim-Bissingen (DE)
Erfinder : KETTNER, Andreas
Zorndorferstr. 8
D-7000 Stuttgart 31 (DE)
Erfinder : SCHWARZE, Udo
Bauernstr. 97
D-7257 Ditzingen (DE)

## Beschreibung

Die Erfindung bezieht sich auf ein Robotergelenk mit einem elektrischen Antriebsmotor nach der Gattung des Hauptanspruchs. Bei einem bekannten Robotergelenk dieser Gattung (US-A 34 19 158) sind zwei mit dem einen Roboterteil drehfest verbundene Betätigungselemente für einen Endlagenschalter mit parallel zur Gelenkachse ausgerichteten Stiften versehen, die durch eine zwischen zwei konzentrisch zueinander angeordneten, an dem einen Roboterteil befestigten Ringkörpern gebildete Ringnut nach oben hindurchtreten und unten mit einem Kopf versehen sind, der seinerseits in eine breitere Ringnut ragt, welche zwischen den beiden genannten Ringkörpern und einem zwischen diesen und der Stirnseite des einen Roboterteils angeordneten dritten Ringkörper gebildet ist. Zum Befestigen der Betätigungselemente in der gewünschten Winkellage sind Gewindemuttern vorgesehen, die auf Gewindeabschnitte der Stifte aufgeschraubt und gegen die beiden konzentrisch zueinander angeordneten Ringkörper gespannt sind. Diese Ausführung ist verhältnismäßig aufwendig und raumbeanspruchend, wenn die den Kopf der Betätigungselemente aufnehmende breitere Ringnut nicht unmittelbar in der Stirnseite des einen Roboterteils untergebracht werden kann. Außerdem sind die Betätigungselemente nur durch Reibungsschluß an dem einen Roboterteil festgehalten, der sich durch Erschütterungen oder die Schaltdruckbeanspruchungen im Laufe der Zeit lösen kann.

Ferner sind elektrische Schalteinrichtungen bekannt (DE-OS 30 06 243), bei denen der Umfang einer umlaufenden Schaltscheibe mit Schaltprofilstücken in Form von Ringen oder Ringteilstücken besetzt ist, die mit radial zum Zentrum der Schaltscheibe gerichteten Ansätzen versehen sind, welche in entsprechend geformte, über den gesamten Umfang verteilte Randaussparungen der Schaltscheibe passend eingreifen. Die als Ringteilstücke ausgebildeten Schaltprofilstücke können so an verschiedenen Stellen des Umfangs auf die Schaltscheibe aufgesetzt werden. Sie wirken über an ihrem Außenumfang gebildete Rampen- bzw. Nockenflächen radial auf den auslenkbaren Schaltarm eines Mikroschalters ein, der seitlich neben der Schaltscheibe angeordnet ist.

## Vorteile der Erfindung

Die erfindungsgemäße Anordnung mit den kennzeichnenden Merkmalen des Hauptanspruchs ist einfach, kompakt und betriebssicher und ermöglicht es, das bzw. die Betätigungselemente geschützt in das Gelenk zu integrieren und leicht verstellbar auszuführen. Die Rampenstücke sind formschlüssig am Tragring festgehalten, der selbst durch einfache Mittel gegen Verdrehen gesichert an dem einen Roboterteil festgelegt werden kann.

Durch die in den Unteransprüchen enthaltenen Merkmale sind vorteilhafte Weiterbildungen der Anordnung nach dem Hauptanspruch möglich.

Die Merkmale der Ansprüche 2 bis 4 ermöglichen einen einfachen und problemlosen Einbau des bzw. der Betätigungselemente in der jeweils gewünschten Stellung. Mit der Ausbildung der Betätigungselemente nach Anspruch 5 können diese aus ihrer Einbaustellung leicht nach außen herausgezogen werden, wenn sie entfernt oder in einer anderen Stellung wieder eingebaut werden sollen.

Zum radialen und axialen Festhalten der Betätigungselemente in der Einbaustellung werden die Merkmale gemäß den Ansprüchen 6 bis 9 vorgeschlagen. Durch diese Merkmale ist erreicht, daß auch die für diese Funktion vorgesehenen Bauteile radial angebaut und ausschließlich durch vom Umfang her angesetzte Werkzeuge an dem einen Roboterteil befestigt bzw. von diesem gelöst werden können.

Die erfindungsgemäße Anordnung erlaubt es auch, ohne zusätzlichen Platzbedarf in Achsrichtung des Gelenks außer dem Endlagenschalter einen Sensor zur Abfrage einer Gelenk-Nullstellung vorzusehen (Anspruch 10).

Besonders vorteilhaft ist es, wenn die Nullstellungs-Abfrage gemäß den Merkmalen der Ansprüche 11 bis 13 erfolgt, weil dadurch zusätzliche Teile für diese Funktion entfallen und bei Verwendung eines geteilten Halteringes jede Ringhälfte mit ebenen Stirnflächen versehen sein kann (Drehteil).

Der Sensor zur Nullstellungs-Abfrage kann zweckmäßig mit einem Endlagenschalter in einem gemeinsamen Gehäuse angeordnet sein. Dem Antriebsmotor können vorteilhaft Mittel zur verzögerungsfrei einsetzenden Kurzschlußbremsung zugeordnet sein, welche beim Verlassen des Arbeitsbereiches des beweglichen Roboterteils und beim Ansprechen des Endlagenschalters ein sicheres und schnelles Stillsetzen des Antriebs gewährleisten.

## Zeichnung

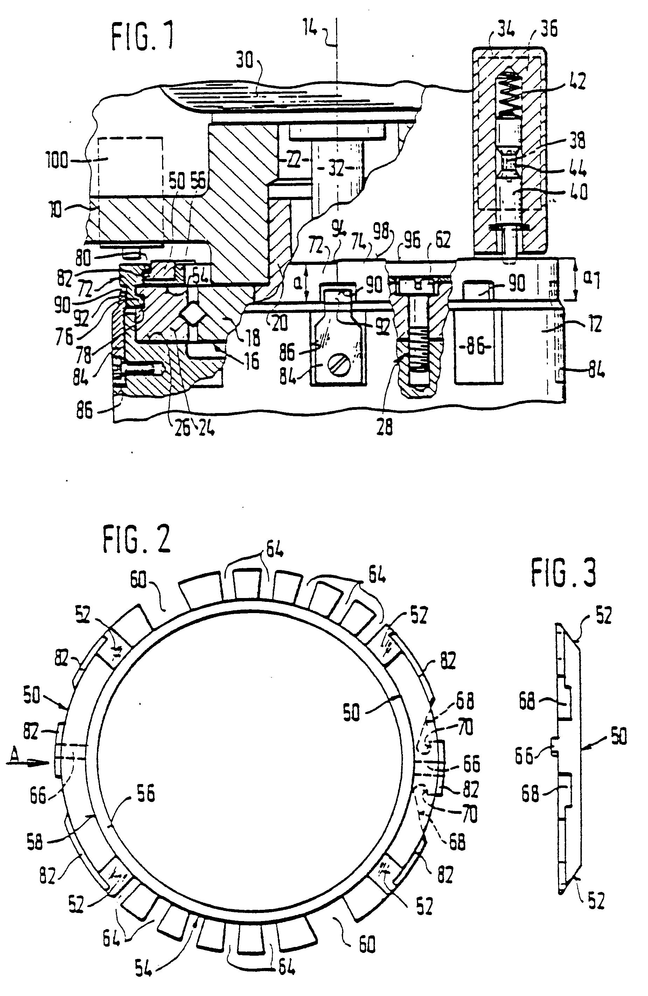

Ein Ausführungsbeispiel der Erfindung ist in der Zeichnung dargestellt und in der nachfolgenden Beschreibung naher erläutert. Es zeigen Figur 1 das erfindungsgemäße Robotergelenk teils in Seitenansicht und teils im Schnitt, Figur 2 eine Draufsicht auf Einzelteile des Robotergelenkes nach Figur 1 und Figur 3 ein Einzelteil aus Figur 2 in Richtung des Pfeiles A gesehen.

## Beschreibung des Ausführungsbeispieles

Das Robotergelenk verbindet ein Roboterteil 10, das im folgenden als Stativ bezeichnet wird, jedoch auch ein vorgelagerter Roboterarm sein könnte, mit einem Roboterarm 12, welcher um eine Gelenkachse 14 schwenkbar am Stativ 10 gelagert ist. Die Lagerung erfolgt spielfrei über ein vorgespanntes Wälzlager 16, vorzugsweise ein Kreuzrollenlager, dessen innerer Laufring 18 auf eine Stahlbuchse 20 aufgezogen ist, die in eine Bohrung 22 im Stativ 10 eingepreßt ist. Der äußere Laufring 24 des Wälzlagers 16 sitzt passend in einer Ausnehmung 26 des Roboterarmes 12 und ist an diesem durch zwei sich diametral gegenüberliegende Schrauben 28 spielfrei befestigt.

Auf dem Stativ ist koaxial zu der Gelenkachse 14 ein Elektromotor 30 befestigt, dessen nach unten ragende Abtriebswelle 32 über ein Untersetzungsgetriebe mit dem Roboterarm 12 verbunden ist. Der Aufbau des Untersetzungsgetriebes ist im vorliegenden Zusammenhang ohne Belang, so daß von einer Darstellung und einer Beschreibung seiner Einzelteile abgesehen wird. Der Elektromotor 30 treibt programmgesteuert den Roboterarm 12 gegenüber dem Stativ 10 drehend an, wodurch der Roboterarm 12 von einer Arbeitsposition zur anderen geschwenkt wird.

Am Stativ 10 ist ferner seitlich ein Gehäuse 34 abnehmbar befestigt, welches einen Endlagenschalter 36 enthält, dessen mit einer Rolle 38 versehener Schaltstößel senkrecht zur Zeichnungsebene bewegbar ist. Zur Betätigung des Endlagenschalters 36 dient ein Schaltbolzen 40, der im Gehäuse 34 parallel zur Gelenkachse 14 verschiebbar geführt ist. Auf den Schaltbolzen 40 wirkt eine Feder 12 ein, welche den Schaltbolzen 40 nach unten gegen Betätigungselemente am Roboterarm 12 drückt, die im folgenden noch näher beschrieben sind.

Der Schaltbolzen 40 ist etwa in Längsmitte mit einer Ringnut 44 versehen, die der Rolle 38 am Schaltstößel des Endlagenschalters 36 gegenüberliegt, wenn sich der Schaltbolzen 40 in der unteren, in Figur 1 dargestellten Schaltstellung befindet. In dieser Stellung drückt eine schalterinterne Feder die Rolle 38 in die Ringnut 44 des Schaltbolzens 40 ein, wobei der Endlagenschalter eine erste Schaltposition einnimmt. Nach einer bestimmten Drehung des Roboterarmes 12 gegenüber dem Stativ 10 bewegen die Betätigungselemente den Schaltbolzen 40 nach oben, wobei die Rolle 38 aus der Ringnut 44 herausgedrückt und der Endlagenschalter 36 in eine zweite Schaltposition überführt wird.

Die am Roboterarm 12 befestigten Betätigungselemente für den Endlagenschalter 36 bestehen aus zwei gleichgeformten, ringsegmentförmigen Rampenstücken 50, die an den Enden je mit einer schragen Auf bzw. Ablauffläche 52 versehen sind. Die beiden Rampenstücke 50 liegen auf einem Tragring 54 auf, der seinerseits auf der oberen Stirnseite des äußeren Laufringes 24 des Wälzlagers 16 aufliegt. Der Tragring 54 ist am Innenrand mit einem nach oben abstehenden Ringbund 56 versehen, an dessen äußerer Umfangsfläche 58 die Rampenstücke 50 anliegen und gegenüber der Gelenkachse 14 zentriert sind. Die Radien des Ringbundes 56 und der Rampenstücke 50 sind so bemessen, daß die Achse des Schaltbolzens 40 etwa auf die mittlere Durchmesserlinie der Rampenstücke 50 trifft.

Der Tragring 54 ist mit zwei sich diametral gegenüberliegenden Aussparungen 60 für die Köpfe 62 der Schrauben 28 versehen, welche den Tragring 54 gegen Verdrehen gegenüber dem Roboterarm 12 sichern. Ferner ist der Tragring 54 mit einer Vielzahl von in gleichmäßigem Abstand zueinander angeordneten, gleich breiten radialen Randaussparungen 64 versehen, welche zum Festhalten der Rampenstücke 50 in bestimmten Winkelstellungen dienen. Zu diesem Zweck ist jedes Rampenstück 50 an seiner Auflagefläche mit einer radial verlaufenden Schwelle 66 versehen, die in eine der Randaussparungen 64 passend eingreift. Durch diese Anordnung ist erreicht, daß die Rampenstücke 50 in radialer Richtung in der vorgeschriebenen Winkellage auf den Tragring 54 bzw. den Roboterarm 12 aufgesteckt werden können.

Jedes Rampenstück 50 ist zu beiden Seiten der Schwelle 66 mit einer zum äußeren Umfang hin offenen Ausnehmung 68 versehen, die innen an einer Hinterschneidung 70 endet. Die Ausnehmungen 68 dienen zum Einführen von Werkzeugen, mit deren Hilfe die Rampenstücke 50 in radialer Richtung aus dem Tragring 54 herausgezogen werden können.

Zum Zentrieren und Festhalten des Tragrings 54 auf dem äußeren Laufring 24, sowie zum Festhalten der Rampenstücke 50 auf dem Tragring 54 ist ein Haltering vorgesehen, der aus zwei Ringhälften 72 und 74 besteht, welche ebenfalls vom Umfang her an den Roboterarm 12 angesetzt sind. Der Haltering 72, 74 hat am unteren Rand einen nach innen gerichteten ersten Ringbund 76, welcher in eine Ringnut 78 im äußeren Laufring 24 eingreift. Am oberen Rand ist der geteilte Haltering 72, 74 mit einem nach innen gekehrten zweiten Ringbund 80 versehen, der passend über einen Flanschrand 82 an den Rampenstücken 50 greift und so die beabsichtigte Zentrier- und Haltefunktion für den Tragring 54 und die Rampenstücke 50 ausübt.

Der Haltering 72, 74 ist am äußeren Laufring 24 durch mehrere Laschen 84 spiellos festgehalten, welche an den Roboterarm 12 angeschraubt sind. Die Laschen 84 sind passend in Vertiefungen 86 an einem zylindrischen Umfangsabschnitt 68 des Roboterarmes 12 eingesetzt, welcher die Gelenkachse 14 konzentrisch umgibt. Die Vertiefungen 86 sind gleichmäßig über den Umfang verteilt und mit der gleichen Teilung sind auch am Umfang des Halteringes 72, 74 Vertiefungen 90 zur passenden Aufnahme der Halteabschnitte 92 der Laschen 84 vorgesehen. Durch diese Anordnung können der Haltering 72, 74 bzw. die Stoßfugen seiner Ringhälften in mehreren Winkelstellungen am Roboterarm 12 festgelegt werden.

Die beiden Ringhälften 72, 74 des Halteringes sind mit einem unterschiedlich großen Höhenmaß a bzw. a versehen, so daß sich an jeder Stoßfuge eine Stufe 94 zwischen den beiden freiliegenden Seitenflächen 96 und 98 der Ringhälften 72 und 74 ergibt. Den Seitenflächen 96, 98 liegt in geringem Abstand ein induktiver Sensor 100 gegenüber, welcher dem Programmsteuergerät des Roboters ein Signal liefert, wenn eine der Stufen 94 unter den Sensor 100 gelangt. Dieses Signal kann vorzugsweise zur elektrischen Abfrage der Nullstellung des Robotergelenkes genutzt werden. Die Nullstellung kann durch die beschriebene Ausbildung der Teile in Stufen eingestellt werden.

Der Sensor 100 kann vorzugsweise mit dem Endlagenschalter 36 in einem gemeinsamen Gehäuse angeordnet sein. Die Signalabgabe des Sensors 100 kann unabhängig von den Ansprechpunkten des Endlagenschalters 36 verstellt bzw. eingestellt werden. Das Stillsetzen der Gelenkbewegung beim Verlassen des Arbeitsbereiches kann durch eine verzögerungsfrei einsetzende Kurzschlußbremsung des Elektromotors 30 beim Auflaufen des Schaltbolzens 40 auf ein Rampenstück 50 schnell und sicher erfolgen.

## Patentansprüche

1. Robotergelenk mit einem elektrischen Antriebsmotor, zu dessen Sicherheitsabschaltung mindestens ein an dem einen Roboterteil (10) befestigter elektrischer Endlagenschalter (36) sowie mindestens ein mit dem anderen Roboterteil (12) drehfest, jedoch in Umfangsrichtung verstellbar verbundenes Betätigungselement (50) für den Endlagenschalter (36) vorgesehen sind, dadurch gekennzeichnet, daß das Betätigungselement (50) ein an sich bekanntes ringsegmentförmiges Rampenstück ist, welches auf einem an der einen Stirnseite des einen Roboterteils (12) gehaltenen Tragring (54) aufliegt, der eine das Rampenstück (50) zur Gelenkachse (14) hin abstützende und zentrierende Schulterfläche (58) hat, und daß ferner das Rampenstück (50) und der Tragring (54) mit ineinander greifenden Erhöhungen (66) und Ausnehmungen (64) versehen sind, durch welche das Rampenstück (50) in Umfangsrichtung gegenüber dem Tragring (54) festgelegt ist.

2. Robotergelenk nach Anspruch 1, dadurch gekennzeichnet, daß die das Rampenstück (50) abstützende und zentrierende Schulterfläche (58) an einem axialen Ringbund (56) des Tragrings (54) gebildet ist.

3. Robotergelenk nach Anspruch 1 oder 2, dadurch gekennzeichnet, daß das Rampenstück (50) mindestens in zwei Stellungen gegenüber dem Tragring (54) festlegbar ist.

4. Robotergelenk nach Anspruch 3, dadurch gekennzeichnet, daß der Tragring (54) mit mehreren gleichgeformten, radialen Randaussparungen (64) und das Rampenstück (50) mit einer aus seiner Auflagefläche hervortretenden Schwelle (66) versehen ist, welche passend in eine Randaussparung (64) des Tragrings (54) eingreift.

5. Robotergelenk nach einem der vorhergehenden Ansprüche, dadurch gekennzeichnet, daß das Rampenstück (50) an seinem Außenumfang mit mindestens einer Ausnehmung (68) zum Einstecken eines Lösewerkzeugs versehen ist.

6. Robotergelenk nach einem der vorhergehenden Ansprüche, dadurch gekennzeichnet, daß der Tragring (54) gegenüber der Gelenkachse (14) durch einen Haltering (72, 74) zentriert ist, welcher an dem einen Roboterteil (12) lösbar befestigt ist.

7. Robotergelenk nach Anspruch 6, dessen beide Roboterteile über ein Wälzlager verbunden sind, dadurch gekennzeichnet, daß der Haltering (72, 74) an dem äußeren Laufring (24) des Wälzlagers (16) zentriert und lösbar festgehalten ist.

8. Robotergelenk nach Anspruch 6 oder 7, dadurch gekennzeichnet, daß der Haltering (72, 74) geteilt ist, mit einem ersten Ringbund (76) in einer Ringnut (78) am Umfang des einen Roboterteils (12) eingreift und mit einem zweiten Ringbund (80) über das Rampenstück (50) den Tragring (54) auf der Stirnseite des einen Roboterteils (12) angelegt hält.

9. Robotergelenk nach Anspruch 8, dadurch gekennzeichnet, daß der geteilte Haltering (72, 74) durch einzelne, radial einwirkende Haltelaschen (84) an dem einen Roboterteil (12) festgehalten ist.

10. Robotergelenk nach einem der vorhergehenden Ansprüche, dadurch gekennzeichnet, daß außer dem Endlagenschalter (36) ein Sensor (100) zur Abfrage einer Gelenk-Nullstellung vorgesehen ist.

11. Robotergelenk nach den Ansprüchen 6 und 10, dadurch gekennzeichnet, daß die Nullstellungs-Abfrage des Sensors (100) über den Haltering (72, 74) erfolgt, welcher mit einem dem Sensor (100) gegenüberliegenden Oberflächenabschnitt (96, 98) versehen ist.

12. Robotergelenk nach Anspruch 11, dadurch gekennzeichnet, daß der Sensor (100) der freien Seitenfläche (96, 98) des Halterings (72, 74) axial gegenüberliegt.

13. Robotergelenk nach Anspruch 12, dadurch gekennzeichnet, daß der Haltering (72, 74) geteilt ist und die beiden Ringhälften (72 und 74) ein unterschiedliches Höhenmaß (a, $a_1$) aufweisen.

14. Robotergelenk nach Anspruch 12, dadurch gekennzeichnet, daß der Haltering (72, 74) aus zwei Ringhälften gebildet ist, von denen die eine aus Metall und die andere aus Nichtmetall besteht.

15. Robotergelenk nach Anspruch 11, dadurch gekennzeichnet, daß der Haltering (72, 74) in mindestens zwei Stellungen an dem einen Roboterteil (12) befestigbar ist.

## Claims

1. Robot joint with an electric drive motor, for the safety cutoff of which there are at least one electric limit switch (36) fastened to one robot part (10) and at least one actuating element (50) for the limit switch (36) which is connected to the other robot part (12) fixedly in terms of rotation, but adjustably in the circumferential direction, characterized in that the actuating element (50) is a sloping piece known per se which is in the form of a ring segment and which rests on a supporting ring (54) held on one end face of one robot part (12) and having a shoulder face (58) supporting and centring the sloping piece (50) relative to the joint axis (14), and in that, furthermore, the sloping piece (50) and the supporting ring (54) are equipped with elevations (66) and recesses (64) which engage one in the other and by means of which the sloping piece (50) is fixed in the circumferential direction relative to the supporting ring (54).

2. Robot joint according to Claim 1, characterized in that the shoulder face (58) supporting and centring the sloping piece (50) is formed on an axial annular collar (56) of the supporting ring (54).

3. Robot joint according to Claim 1 or 2, characterized in that the sloping piece (50) can be fixed at least in two positions relative to the supporting ring (54).

4. Robot joint according to Claim 3, characterized in that the supporting ring (54) is equipped with several radial edge clearances (64) of identical shape and the sloping piece (50) is equipped with a sill (66) which projects from its bearing surface and which engages with a fit into an edge clearance (64) of the supporting ring (54).

5. Robot joint according to one of the preceding claims, characterized in that the sloping piece (50) is equipped on its outer circumference with at least one recess (68) for the insertion of a releasing tool.

6. Robot joint according to one of the preceding claims, characterized in that the supporting ring (54) is centred relative to the joint axis (14) by means of a retaining ring (72, 74) which is fastened releasably to one robot part (12).

7. Robot joint according to Claim 6, the two robot parts of which are connected via a rolling bearing, characterized in that the retaining ring (72, 74) is centred and releasably retained on the outer ring (24) of the rolling bearing (16).

8. Robot joint according to Claim 6 or 7, characterized in that the retaining ring (72, 74) is split, engages by means of a first annular collar (76) in an annular groove (78) on the circumference of one robot part (12) and, by means of a second annular collar (80) keeps the supporting ring (54) resting against the end face of one robot part (12) via the sloping piece (50).

9. Robot joint according to Claim 8, characterized in that the split retaining ring (72, 74) is retained on one robot part (12) by means of individual radially acting retaining lugs (84).

10. Robot joint according to one of the preceding claims, characterized in that, in addition to the limit switch (36), a sensor (100) for detecting a joint neutral position is provided.

11. Robot joint according to Claims 6 and 10, characterized in that the neutral-position detection of the sensor (100) takes place via the retaining ring (72, 74) which is equipped with a surface portion (96, 98) located opposite the sensor (100).

12. Robot joint according to Claim 11, characterized in that the sensor (100) is located axially opposite the free side face (96, 98) of the retaining ring (72, 74).

13. Robot joint according to Claim 12, characterized in that the retaining ring (74, 74) is split and the two ring halves (72 and 74) have a different height (a, a₁).

14. Robot joint according to Claim 12, characterized in that the retaining ring (72, 74) is formed from two ring halves, of which one consists of metal and the other of non-metal.

15. Robot joint according to Claim 11, characterized in that the retaining ring (72, 74) can be fastened to one robot part (12) in at least two positions.

## Revendications

1. Articulation de robot avec moteur électrique d'entraînement, pour laquelle la connexion de sécurité est prévue avec au moins un connecteur (36) de fin de course fixé à une des parties (10) du robot, ainsi qu'au moins un élément (50) d'actionnement fixé et tournant de concert avec l'autre partie (12) du robot, et cependant réglable en direction périphérique, prévu pour le connecteur (36) de fin de course, caractérisé en ce que l'élément (50) d'actionnement est un élément connu de rampe en forme de segment annulaire, qui repose sur un anneau support (54) maintenu sur l'un des côtés frontaux d'une partie (12) du robot, ledit anneau (54) de maintien ayant une surface (58) d'épaulement qui soutient et centre l'élément (50) de rampe par rapport à l'axe d'articulation, et que, de plus, l'élément (50) de rampe et l'anneau support (54) sont munies de saillies (65) et d'évidements (64) qui s'engagent les uns dans les autres et, de ce fait, l'élément (50) de rampe est fixé en direction périphérique par rapport à l'anneau support (54).

2. Articulation de robot selon la revendication 1, caractérisée en ce que la surface (58) d'épaulement soutenant et centrant l'élément (50) de rampe est formé sur une bande annulaire axiale (56) de l'anneau porteur (54).

3. Articulation de robot selon la revendication 1 ou 2, caractérisée en ce que l'élément (50) de rampe peut être fixé en au moins deux positions par rapport à l'anneau porteur (54).

4. Articulation de robot selon la revendication 3, caractérisée en ce que l'anneau porteur (54) est pourvu de plusieurs évidements (64) de bord, radiaux et de forme identique, et que l'élément (50) de rampe est pourvue d'une saillie (65) qui dépasse de sa surface de pose et s'engage de façon appropriée dans un évidement (64) de l'anneau porteur (54).

5. Articulation de robot selon l'une quelconque des revendications précédentes, caractérisée en ce que l'élément (50) de rampe est muni à sa périphérie extérieure d'un moins un évidement (68) pour l'introduction d'un outil de démontage.

6. Articulation de robot selon l'une quelconque des revendications précédentes, caractérisée en ce que l'anneau porteur (54) est centré par rapport à l'axe (14) d'articulation par un anneau (72, 74) de maintien, lequel est fixé de façon démontable à l'une des parties (12) du robot.

7. Articulation de robot selon la revendication 6, caractérisée en ce que l'anneau (72, 74) de maintien est centré et fixé de façon démontable sur l'anneau extérieur (25) de roulement du roulement (16) à rouleaux.

8. Articulation de robot selon la revendication 6 ou 7, caractérisée en ce que l'anneau (72, 74) de maintien est divisé, avec une première bande annulaire (76) qui s'engage dans une rainure annulaire (78) à la périphérie d'une partie (12) du robot, et une seconde bande annulaire (80) qui maintient par l'intermédiaire de l'élément (50) de rampe l'anneau support (54) sur le côté frontal d'une partie (12) du robot.

9. Articulation de robot selon la revendication 8, caractérisée en ce que l'anneau divisé (72, 74) de maintien est fixé sur une partie (12) du robot par des couvre-joints séparés et agissant radialement.

10. Articulation de robot selon l'une quelconque des revendications précédentes, caractérisée en ce que, en plus du connecteur (35) de fin de course, il est prévu un détecteur (100) pour l'identification de la position zéro de l'articulation.

11. Articulation de robot selon les revendications 6 et 10, caractérisée en ce que l'identification de la position zéro par le détecteur (100) se produit par l'intermédiaire de l'anneau (72, 74) de maintien, lequel a une coupure de surface supérieure (96, 98) située en face du détecteur (100).

12. Articulation de robot selon la revendication 11, caractérisée en ce que le détecteur (100) est situé de façon axiale en face de la surface libre latérale (96, 98) de l'anneau (72, 74) de maintien.

13. Articulation de robot selon la revendication 12, caractérisée en ce que l'anneau (72, 74) est divisé, et que les deux moitiés (72 et 74) d'anneau présentent une différence de mesure de hauteur $(a, a_1)$.

14. Articulation de robot selon la revendication 12, caractérisée en ce que l'anneau (72, 74) de maintien est formé de deux moitiés d'anneau, l'une étant en métal, et l'autre n'étant pas en métal.

15. Articulation de robot selon la revendication 11, caractérisée en ce que l'anneau (72, 74) de maintien peut être fixé en au moins deux positions sur une partie (12) du robot.

FIG. 1

FIG. 2

FIG. 3